# FASCICULE DE BREVET EUROPEEN

(11) **EP 0 650 567 B1**
(45) Date de publication et mention de la délivrance du brevet: **16.07.1997**
(21) Numéro de dépôt: 94917027.8
(22) Date de dépôt: 17.05.1994
(51) Int. Cl.: F16H 61/26, F16D 3/76, F16F 15/08, F16F 7/00

(54) **TRINGLE DE TRANSMISSION DE MOUVEMENT A DISPOSITIF DE SECURITE**
BEWEGUNGSÜBERTRAGUNGSSTANGE MIT EINER SICHERHEITSVORRICHTUNG
MOTION TRANSMITTING ROD WITH SECURITY DEVICE

(30) Priorité: 18.05.1993 FR 9305991; 20.07.1993 FR 9308887
(43) Date de publication de la demande: 03.05.1995
(73) Titulaire: HUTCHINSON, F-75008 Paris (FR)
(72) Inventeur: GIRARD, André, F-28200 La Chapelle-du-Noyer (FR); PIU, Giovanni, F-18000 Bourges (FR)
(74) Mandataire: Picard, Jean-Claude Georges
(86) Numéro de dépôt international: FR9400585
(87) Numéro de publication internationale: WO9427068

(56) Documents cités:
- EP-A- 0 145 572
- EP-A- 0 345 001
- DE-A- 2 311 458
- FR-A- 927 468
- FR-A- 1 561 619
- FR-A- 2 149 144
- FR-A- 2 556 429
- FR-E- 42 744
- GB-A- 2 181 517
- US-A- 4 492 129
- MACHINE DESIGN, vol.34, no.25, 25 Octobre 1962, CLEVELAND US pages 173 - 177 SMITH, N.J. 'DESIGN NOTEBOOK : TUBING JOINTS'

## Description

La présente invention concerne une tringle de transmission de mouvement, notamment pour commande de boîte de vitesses, sectionnée transversalement et définissant ainsi deux extrémités, lesquelles sont raccordées par un manchon filtrant élastique.

Pour éviter la transmission des vibrations de la boîte de vitesses au levier de commande, on peut utiliser des liaisons par câbles, ou l'on peut disposer un joint filtrant à l'extrémité de la tringle de transmission, mais ces solutions sont coûteuses.

Le document EP 0345 001 décrit une tringle de transmission de mouvement à solution de continuité de ce type, dans laquelle les extrémités en regard des deux tronçons sont reliées l'une à l'autre par un manchon de matière élastique enserré dans un manchon métallique. Ce dernier est relié par deux broches transversales rigides auxdits tronçons, les extrémités de ces broches étant enrobées de matière élastique pour éviter la création de ponts rigides transmettant les vibrations. L'inconvénient de cette disposition réside dans le fait que cette matière élastique est fortement comprimée entre les extrémités des broches et le manchon métallique lorsque la tringle est soumise à des efforts de flexion ou de torsion, ce qui soumet cette matière à une fatigue importante, conduisant rapidement à son cisaillement et à une perte totale d'efficacité.

La présente invention vise à éliminer cet inconvénient et à éviter que les susdits efforts passent par de telles broches de faible section.

Le but de la présente invention est donc d'apporter d'autres solutions à ce problème, qui soient d'un montage simple et peu coûteuses à fabriquer, tout en respectant les impératifs d'encombrement.

A cet effet, une tringle conforme à l'invention est caractérisée en ce que lesdites extrémités sont tubulaires, et en ce que ledit manchon comporte une barre plate enrobée d'un revêtement élastique, cette barre présentant, au niveau de la jonction entre lesdites extrémités tubulaires de la tringle, deux élargissements également enrobés dudit revêtement élastique et engagés dans deux paires d'encoches de formes respectivement complémentaires de celles de ces élargissements et adaptées à empêcher toute rotation axiale relative entre les deux extrémités tubulaires.

Selon une autre disposition de l'invention, ledit revêtement élastique du manchon porte un bourrelet périphérique propre à s'intercaler, après montage, entre lesdites extrémités tubulaires de la tringle.

Ce bourrelet constituera ainsi une butée élastique entre ces extrémités, propre à limiter leur déplacement axial l'une vers l'autre, et là encore sans création d'aucune jonction rigide entre ces extrémités.

Avantageusement, la tringle pourra encore se caractériser en ce que deux tronçons de tube de renforcement aplatis sont serrés sur lesdites extrémités tubulaires aplaties de la tringle, ce qui renforcera la tringle à ce niveau.

Pour éviter que ces tronçons ne pivotent axialement l'un par rapport à l'autre, il est avantageux qu'ils comportent en bout, dans leurs extrémités en regard, des encoches semblables à celles qui sont pratiquées en bout dans les extrémités tubulaires de la tringle, de sorte à recevoir les extrémités desdits élargissements.

Différents modes d'exécution de l'invention vont maintenant être décrits à titre d'exemples nullement limitatifs, avec référence aux figures du dessin annexé dans lequel :
- la figure 1 est une vue en bout d'un manchon d'une tringle de transmission conforme à l'invention ;
- la figure 2 est une vue en coupe par la ligne II-II de la figure 1 ;
- la figure 3 est une vue en coupe par la ligne III-III de la figure 2 ;
- la figure 4 est une vue de profil du manchon à plus petite réchelle ;
- la figure 5 est une demi-vue en coupe, selon la ligne V-V de la figure 6, d'une tringle de transmission conforme à l'invention, équipée du manchon des figures 1 à 4 et avec demi-vue en élévation, la figure 5a étant une vue partielle d'une variante ; et
- la figure 6 est une demi-vue en coupe, selon la ligne VI-VI de la figure 5, de la tringle de la figure 5, avec demi-vue en plan.

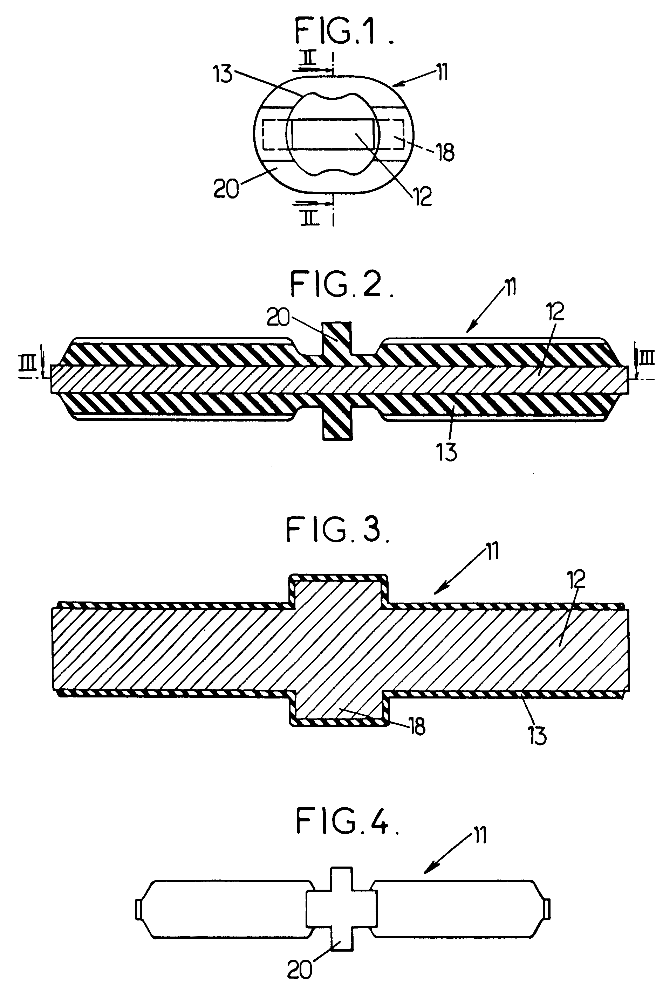

Le manchon filtrant 11 représenté aux figures 1 à 5 comporte une âme pleine et rigide 12 constituée par exemple par un fer plat pourvu de deux élargissements latéraux 18 et enrobé d'un revêtement en caoutchouc ou élastomère 13. Dans sa partie centrale, le revêtement, qui ailleurs épouse la forme de la barre 12, comporte un bourrelet périphérique 20.

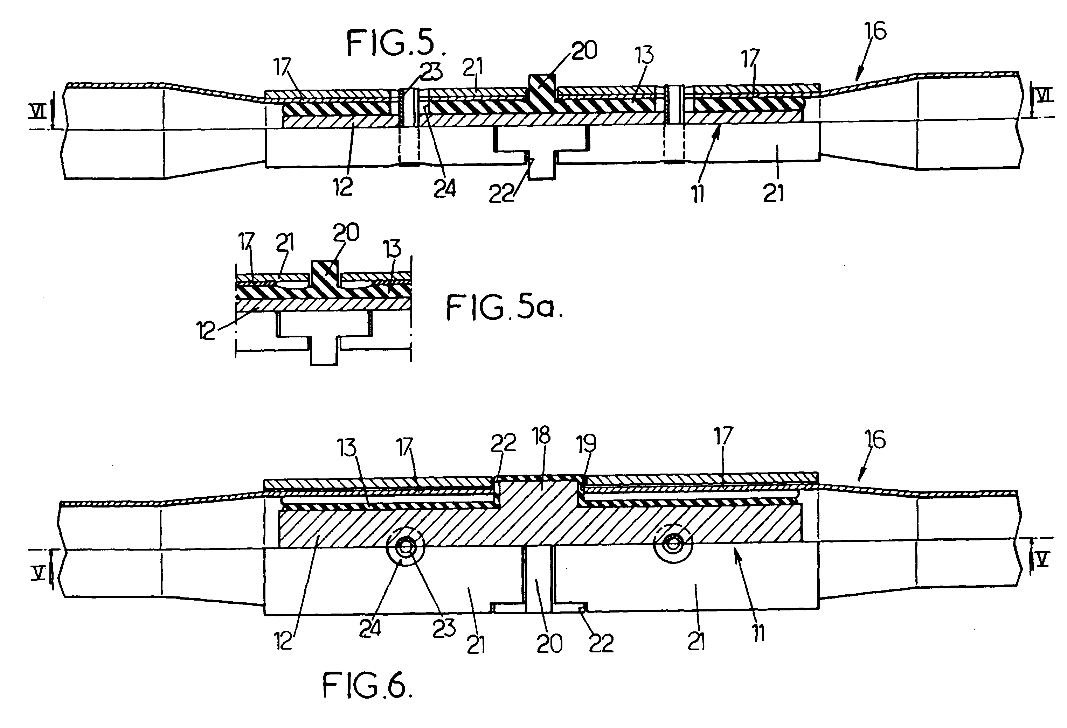

Ce manchon est introduit dans les extrémités tubulaires 17 d'une tringle de transmission 16 préalablement sectionnée, lesquelles extrémités sont pourvues en bout de deux encoches 19 s'ouvrant l'une vers l'autre, dans lesquelles viennent s'engager les élargissements 18 du manchon (voir figures 5 et 6). Ceci empêche toute rotation axiale relative entre les deux extrémités tubulaires 17, même minime, ce qui élimine tout risque de jeu en rotation et donc tout risque d'imprécision dans la commande. Bien entendu, le bourrelet 20 vient s'interposer entre les bouts des extrémités 17, de part et d'autre des encoches précitées, de sorte qu'il constitue une butée de compression élastique entre elles.

Ceci étant, on pourrait terminer le montage en aplatissant les deux extrémités tubulaires 17, comprimant le revêtement élastique 13 et assurant ainsi la solidarisation de ces deux extrémités.

Toutefois, il peut être préférable de monter auparavant, sur ces extrémités 17, deux tubes de renforcement 21 comportant en bout, dans leurs extrémités en regard, des encoches 22 semblables à celles qui sont pratiquées en bout dans les extrémités tubulaires 17 de la tringle, de sorte à recevoir les extrémités desdits élargissements 18.

C'est ensuite l'ensemble de ces tronçons 21 et des extrémités tubulaires 17 qui est aplati, comme visible en comparant les figures 5 et 6 ; on obtient de la sorte une tringle 16 renforcée au niveau de sa coupure, coupure qui a supprimé tout pont rigide entre les extrémités 17, sans pour autant introduire dans la transmission un jeu préjudiciable à la précision de la commande.

En principe, le manchon comprimé 11 empêche tout désemboîtement entre les extrémités tubulaires 17, mais on peut renforcer la sécurité à cet égard grâce à des goupilles 23 traversant à la fois les tubes 17 et 21 et la barre 12. Des trous 24 oblongs ou d'un diamètre plus important que celui des goupilles, éventuellement caoutchoutés, prévus soit dans la barre, soit dans les tubes (cas du dessin), empêcheront encore la création de tout pont rigide entre les extrémités tubulaires 17.

Il est à noter enfin qu'au cas où l'on utilise des tronçons de renforcement, les encoches peuvent être prévues seulement dans ceux-ci, étant absentes dans les extrémités tubulaires 17. Dans ce cas, bien entendu, l'écartement entre les bouts de ces extrémités tubulaires sera au moins égal à la largeur des élargissements 18 (voir détail figure 5a).

## Revendications

1. Tringle (6) de transmission de mouvement, notamment pour commande de boîte de vitesses, sectionnée transversalement et définissant ainsi deux extrémités (17), lesquelles sont raccordées par un manchon filtrant (11) élastique, caractérisée en ce que lesdites extrémités (17) sont tubulaires, et en ce que ledit manchon (11) comporte une barre plate (12) enrobée d'un revêtement élastique (13), cette barre (12) présentant, au niveau de la jonction entre lesdites extrémités tubulaires (17) de la tringle, deux élargissements (18) également enrobés dudit revêtement élastique (13) et engagés dans deux paires d'encoches (19) de formes respectivement complémentaires de celles de ces élargissements et adaptées à empêcher toute rotation axiale relative entre les deux extrémités tubulaires (17).

2. Tringle selon la revendication 1, caractérisée en ce que ledit revêtement élastique (13) du manchon (11) porte un bourrelet périphérique (20) intercalé entre lesdites extrémités tubulaires (17) de la tringle.

3. Tringle selon la revendication 1 ou 2, caractérisée en ce que lesdites extrémités tubulaires (17) de la tringle présentent, pour produire le serrage dudit manchon (11), un aplatissement dans la même direction que celui de ladite barre (12).

4. Tringle selon l'une quelconque des revendications précédentes, caractérisée en ce que lesdites encoches (19) sont pratiquées en bout dans lesdites extrémités (17).

5. Tringle selon les revendications 3 et 4, caractérisée en ce que deux tronçons de tube de renforcement aplatis (21) sont serrés sur lesdites extrémités tubulaires aplaties (17) de la tringle, ces tronçons comportant en bout, dans leurs extrémités en regard, des encoches (22) semblables à celles qui sont pratiquées en bout dans les extrémités tubulaires (17) de la tringle, de sorte à recevoir les extrémités desdits élargissements (18).

6. Tringle selon l'une quelconque des revendications précédentes, caractérisée en ce qu'elle comporte des goupilles (23) de sécurité au désemboîtement, traversant à la fois lesdites extrémités tubulaires et la barre (12), sans création de pont rigide entre elles.

## Patentansprüche

1. Gestänge (6) zur Übertragung von Bewegung, insbesondere zur Steuerung eines Getriebes, welches transversal in Sektionen unterteilt ist und auf diese Weise zwei Enden (17) definiert, welche über eine elastische Filterbuchse (11) verbunden sind, **dadurch gekennzeichnet, daß** die Enden (17) röhrenförmig sind, und dadurch, daß die Buchse (11) einen flachen Stab (12) umfaßt, der mit einer elastischen Verkleidung (13), umhüllt ist, wobei der Stab (12) auf der Höhe der Verbindung zwischen den röhrenförmigen Enden (17) des Gestänges zwei Erweiterungen (18) aufweist, die gleicherweise mit der elastischen Verkleidung (13) umgeben sind, und in zwei Paare von Ausnehmungen (19) eingreifen, deren Formen jeweils komplementär zu denen der Erweiterungen sind und ausgebildet sind, um jegliche relative achsiale Rotation zwischen den zwei röhrenförmigen Enden (17) zu verhindern.

2. Gestänge nach Anspruch 1, **dadurch gekennzeichnet, daß** die elastische Verkleidung (13) der Buchse (11) eine periphere Wulst (20) trägt, welche zwischen die röhrenförmigen Enden (17) des Gestänges geschaltet ist.

3. Gestänge nach Anspruch 1 oder 2, **dadurch gekennzeichnet, daß** die röhrenförmigen Enden (17) des Gestänges zur Verriegelung der Buchse (11) eine Abflachung in der selben Richtung aufweisen, wie die der Stange (12).

4. Gestänge nach einem der vorhergehenden Ansprüche, **dadurch gekennzeichnet, daß** die Ausnehmungen (19) am Ende der Enden (17) ausgebildet sind.

5. Gestänge nach den Ansprüchen 3 und 4, **dadurch gekennzeichnet, daß** zwei Abschnitte einer abgeflachten Verstärkungsröhre (21) auf den abgeflachten röhrenförmigen Enden (17) des Gestänges befestigt sind, wobei die Abschnitte stirnseitig an ihren gegenüberliegenden Enden Ausnehmungen (22) tragen, entsprechend denjenigen, die stirnseitig an den röhrenförmigen Enden (17) des Gestänges ausgebildet sind, um die Enden der Erweiterungen (18) aufzunehmen.

6. Gestänge nach einem der vorhergehenden Ansprüche, **dadurch gekennzeichnet, daß** es Sicherheitsstifte (23) gegen ein Entkoppeln umfaßt, welche jeweils die röhrenförmigen Enden und die Stange (12) durchdringt, ohne die Erzeugung eines steifen Punktes zwischen diesem.

## Claims

1. Motion transmission rod (6), especially for operating a gearbox, this rod being cut transversely and so defining two ends (17), which are connected to each other by an elastic filtering sleeve (11), characterized in that said sleeve ends (17) are tubular and in that said sleeve (11) comprises a flat bar (12) wrapped with an elastic coating (13), this bar (12) presenting, at the point of the junction between said tubular ends (17) of the rod, two widened parts (18) also wrapped (17) with said elastic coating (13) and engaged in two pairs of notches (19), these notches having a shape respectively complementary to those of these widened parts (18) and adapted to prevent any relative axial rotation between the two tubular ends (17).

2. Rod according to claim 1, characterized in that said elastic coating (13) of the sleeve (11) has a peripheral bead (20) inserted between said tubular extremities (17) of the rod.

3. Rod according to claim 1 or 2, characterized in that said tubular extremities (17) of the rod are flattened in order to produce the clamping of said sleeve (11), this flattening being in the same direction as that of said bar (12).

4. Rod according to any one of the preceding claims, characterized in that said notches (19) are cut at the end of said extremities (17).

5. Rod according to claims 3 and 4, characterized in that two flattened lengths of reinforcing tube (21) are clamped onto said flattened tubular extremities (17) of the rod, these lengths including, at the end, in their facing extremities, notches (22) similar to those which are made in the end face of the tubular extremities (17) of the rod, so as to receive the extremities of said widened parts (18).

6. Rod according anyone of the preceding claims, characterized in that it includes pins (23) for guarding against pulling apart, passing both through said tubular extremities and through the bar (12) without creating a rigid bridge between them.
